# FASCICULE DE BREVET EUROPEEN

(11) **EP 3 833 861 B1**
(45) Date de publication et mention de la délivrance du brevet: **28.09.2022**
(21) Numéro de dépôt: 19778567.8
(22) Date de dépôt: 09.08.2019
(51) Int. Cl.: F02K 1/04, F02K 1/80

(54) **CONE D'ÉJECTION À FIXATION FLEXIBLE**
AUSPUFFKONUS MIT FLEXIBLER BEFESTIGUNG
EXHAUST CONE WITH FLEXIBLE ATTACHMENT

(30) Priorité: 10.08.2018 FR 1857457
(43) Date de publication de la demande: 16.06.2021
(73) Titulaire: Safran Ceramics, 33185 Le Haillan (FR)
(72) Inventeur: CONETE, Eric, 77550 MOISSY-CRAMAYEL (FR); CARRERE, Benoit, 77550 MOISSY-CRAMAYEL (FR)
(74) Mandataire: Ernest Gutmann - Yves Plasseraud S.A.S.
(86) Numéro de dépôt international: PCT/FR2019/000127
(87) Numéro de publication internationale: WO 2020/030858

(56) Documents cités:
- EP-A1- 0 316 233
- US-A1- 2011 203 255
- US-A1- 2014 158 458

## Description

### DOMAINE

La présente invention se rapporte à un ensemble situé à l'arrière (extrémité aval) d'un turboréacteur d'aéronef pour optimiser l'écoulement des gaz chauds expulsés par le turboréacteur, et possiblement absorber au moins une partie du bruit engendré par l'interaction de ces gaz chauds, issus des parties internes moteur (chambre de combustion, turbine(s), avec l'air ambiant et avec le flux d'air froid expulsé par la soufflante du turboréacteur.

Plus précisément, l'invention concerne la liaison entre ce qui est souvent dénommé « cône d'éjection » et, située juste à l'amont, une sortie de gaz du turboréacteur.

Typiquement le cône d'éjection est complété (entouré) par une partie dite « tuyère primaire », ces éléments étant couramment désignés par les termes anglo- saxons « plug » ou « tail cone » pour le cône d'éjection et « nozzle » ou « primary nozzle » pour la tuyère.

Le « cône d'éjection » est destiné à être positionné en aval de la (partie) turbine du turboréacteur, autour de laquelle la tuyère primaire est placée concentriquement. Le cône d'éjection et la tuyère primaire sont tous deux fixés sur un carter du turboréacteur par un système de fixation par des brides. Les documents US2011/203255 A1, EP0316233 A1 et US2014/158458 A1 divulguent des turboréacteurs avec des liaisons et des systèmes de fixation selon l'art antérieur.

Est ainsi déjà connu en soi, un ensemble pour turboréacteur d'aéronef, comprenant :
- un élément central d'éjection de gaz, annulaire autour d'un axe (X) et adapté pour que du gaz soit éjecté par le turboréacteur autour de lui, d'amont vers l'aval, et
- une bride de liaison interposée entre, à l'amont, une dite sortie métallique d'un turboréacteur et, à l'aval, l'élément central, pour les relier ensemble.

L'axe X précité est l'axe longitudinal, ou axe de rotation, de la turbomachine (en particulier de la soufflante 20 et des aubes mobiles du moteur 12). Dans ce contexte, axial a pour sens suivant (ou parallèle à) l'axe X, radial : radialement à l'axe X et circonférentiel : autour de l'axe X.

L'élément central d'éjection de gaz peut correspondre au cône d'éjection précité (repéré 1 ci-après), ou au moins à la partie amont 1a ci-après.

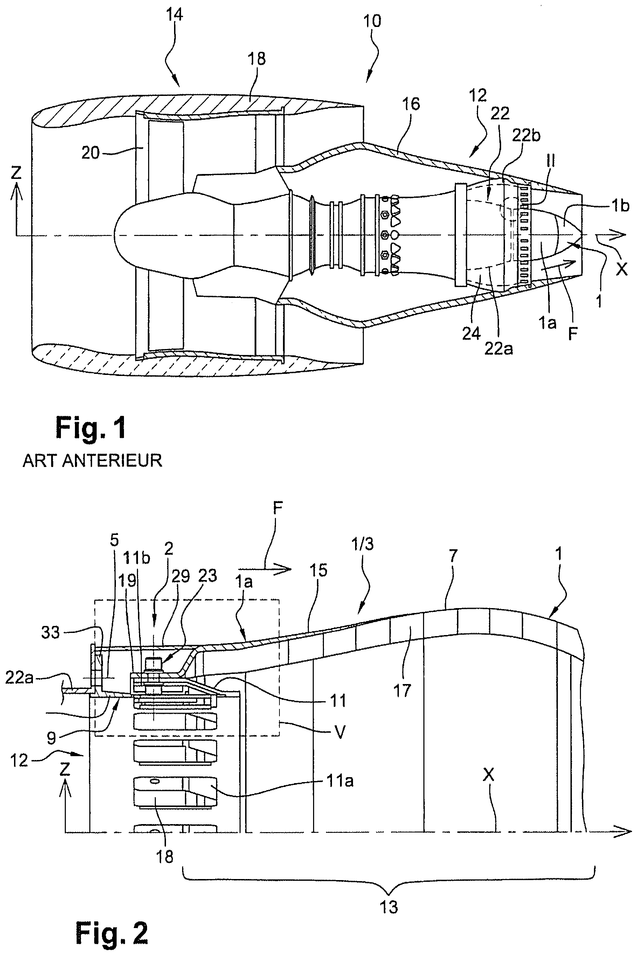

Un cône d'éjection classique 1 est représenté à la figure 1, sur laquelle l'amont (AM) et l'aval (AV) de la structure suivant un axe moteur (axe X ci-avant) sont situés respectivement à gauche et à droite de la figure.

Plus généralement, est illustrée figure 1, un turboréacteur à gaz d'aéronef 10 dont la partie centrale, formant le moteur 12 à turbine(s) à gaz, est montée à l'intérieur d'un ensemble 14 de nacelle de moteur, comme cela est typique d'un aéronef conçu pour un fonctionnement subsonique. L'ensemble 14 de nacelle comprend généralement une nacelle de moteur (« core » en anglais) 16 et une nacelle de soufflante 18 entourant une soufflante 20 située axialement en amont du moteur 12.

Axialement en partie aval, le moteur 12 comprend au moins une turbine (qui peut être une turbine basse pression) et, encore en aval, un carter d'échappement 22 comprenant une virole annulaire interne 22a et une virole annulaire externe 22b délimitant entre elles une partie aval de la veine primaire 24 dans laquelle circule les gaz de combustion issus de la chambre de combustion du moteur 12.

Axialement, la virole annulaire interne 22a est reliée au cône d'éjection 1, lequel peut comprendre une partie amont 1a (couramment désignée sous le terme « front plug »), de forme sensiblement cylindrique, et une partie aval 1b (couramment désignée sous le terme « rear plug »), de forme conique.

Relier (fixer) ensemble la sortie métallique précitée du turboréacteur, qui peut être ladite virole annulaire interne 22a, et ledit élément central, qui peut être ladite partie amont 1a du cône d'éjection 1, est difficile. En, effet, comme on le voit figure 2, il peut être compliqué de fixer ensemble axialement, au niveau d'un bulbe 7, la sortie métallique précitée du turboréacteur, qui peut être ladite virole annulaire interne 22a et l'élément central (repéré de façon générale 3) que l'on assimilera, dans l'exemple de réalisation de l'invention qui suit, au cône d'éjection 1, le bulbe 7 étant une zone, renflée radialement vers l'extérieur, que peut présenter l'élément central 3.

Peuvent ainsi se poser en particulier des problèmes :
- de gestion du diamètre d'entrée de l'élément central pour le passage de supports souples,
- de fixation compliquée,
- et de liaisons inclinées (non parallèles à l'axe X), dans le bulbe.

Comme proposé par l'invention et selon la revendication 1, une solution à une partie au moins de ces problèmes consiste en ce que, dans un ensemble pour turboréacteur d'aéronef tel que défini ci-avant, la bride de liaison comprenne :
- une partie annulaire, et,
- circonférentiellement, des pattes flexibles présentant individuellement, axialement :
   - une première extrémité à laquelle la patte est raccordée à ladite partie annulaire, et
   - une seconde extrémité libre vers laquelle ladite patte est fixée avec l'élément central, la seconde extrémité libre d'une dite (de chaque dite) patte étant située axialement à l'amont de la première extrémité de cette patte.

En assurant une souplesse de l'aval vers l'amont dans les fixations via lesdites pattes flexibles, on va pouvoir rapprocher vers l'amont, donc vers la bride de liaison, la fixation de l'élément central/cône d'éjection, ceci favorisant une zone de fixation située axialement en dehors d'un dit bulbe et d'une zone de traitement acoustique qui pourrait être prévue.

La solution proposée permet en outre notamment de reprendre les dilatations différentielles entre ledit élément central et ladite partie annulaire qui peuvent respectivement appartenir aux, ou définir le carter d'échappement métallique et le cône d'éjection qui n'est pas métallique.

A ce sujet, il est en outre proposé que, radialement, les pattes flexibles s'étendent en saillie radiale vers l'extérieur par rapport à la première extrémité et/ou par rapport à des ouvertures formées dans la partie annulaire.

Ceci permet de décaler radialement les zones de fixation et de conjuguer souplesse et facilité de montage

En outre, et notamment dans ce cas, deux possibilités ont été plus précisément définies :
- d'abord, il est proposé qu'une dite patte puisse être raccordée à ladite partie annulaire, à une dite première extrémité, par l'intermédiaire de languettes s'étendant vers l'aval et qui seraient monobloc à l'amont avec ladite partie annulaire ;
- ensuite, il est proposé en alternative qu'une dite patte puisse être raccordée de façon monobloc à ladite partie annulaire, à l'endroit d'une partie de ladite partie annulaire formant un bord aval d'une dite ouverture.

Dans le second cas, en découpant localement, à l'endroit d'une zone par exemple rectangulaire, la partie annulaire sur trois côtés et en pliant la partie découpée pour former une dite patte flexible, on va éviter de rajouter du poids et rendre aisée tant la fabrication que l'atteinte de la fixation souple souhaitée.

Dans le premier cas, si on prévoit de telles languettes, intégrées dans une forme en créneaux de ladite partie annulaire, on va aussi limiter le poids, ayant en effet allégé d'une autre manière cette partie annulaire.

Dans le texte, raccordé à pour sens fixé avec par un moyen mécanique (vissage, soudage notamment) ou intégré avec. Si cela créé un raccordement monobloc, cela est précisé.

De préférence, ladite partie annulaire sera coaxiale avec ledit élément central.

Pour tirer au mieux parti du rapprochement précité, vers la bride de liaison, de la fixation de l'élément central/cône d'éjection.
, il est aussi proposé que ledit élément central présente une paroi périphérique présentant une partie extrême amont où l'élément central sera fixé avec lesdites pattes flexibles à leurs dites secondes extrémités libres.

Ceci favorisera également la présence précitée d'une zone de fixation située axialement en dehors d'un dit bulbe et d'une zone de traitement acoustique qui pourrait aussi être prévue.

En particulier, ladite paroi périphérique pourra utilement :
- être pourvue localement d'une structure d'atténuation acoustique (qui pourra être à âme alvéolaire), et
- présenter sa dite partie extrême amont (de fixation) en amont de la structure d'atténuation acoustique.

Il pourra même être possible que la structure d'atténuation acoustique s'étende axialement jusqu'au droit desdites pattes.

Ainsi, on aura pu fixer ledit élément central, y compris un élément central en CMC (composite à matrice céramique, comme connu en soi), sans impacter le traitement acoustique et sans être situé dans le profil aérodynamique en bulbe. La bride de liaison pourra alors être métallique, sans difficulté. Et, d'autant plus ainsi, on maximisera la surface traitée acoustique de l'élément central.

Ce qui précède sera de préférence réalisé :
- avec une dite partie extrême amont de fixation de l'élément central s'étendant parallèlement audit axe (X) (évitant donc les liaisons inclinées précitées),
- de même pour lesdites pattes vers leurs dites secondes extrémités, de façon qu'ainsi ces pattes et ladite partie extrême amont de l'élément central/cône d'éjection soient fixées ensemble par des vis les traversant.

On pourra aussi utilement prévoir que la paroi périphérique précitée se prolonge :
- axialement vers l'amont, et
- de façon radialement extérieure par rapport à ladite partie extrême amont qu'elle recouvre sauf à des endroits de passages radiaux pour lesdites vis.

Avec desdites pattes flexibles assurant une souplesse de l'aval vers l'amont dans les fixations, on va pouvoir :
- gagner en compacité,
- donc limiter la masse de la solution par rapport à d'autres supports souples,
- intégrer, y compris avec des brides de liaison métalliques, des architectures d'éléments centraux/cônes d'éjection (CMC ou métalliques) pourvus de traitements acoustiques rapportés à une veine de gaz (voir la veine primaire 24 précitée) équipée de raidisseurs amont et aval.

L'invention pourra être, si nécessaire, mieux comprise et d'autres détails, caractéristiques et avantages de l'invention pourront apparaître à la lecture de la description suivante faite à titre d'exemple non limitatif en référence aux dessins annexés dans lesquels :

### BREVE DESCRIPTION DES FIGURES

- la figure 1 est une coupe schématique de profil d'une turbomachine pour aéronef ;
- la figure 2 correspond à la vue locale dans le cadre II de la figure 1, dans une version conforme à l'invention ;
- la figure 3 est une vue en perspective de la bride de liaison (9 ci-après), dans un premier mode de réalisation ;
- la figure 4 est un agrandissement de la zone marquée IV figure 3 ;
- la figure 5 est un agrandissement de la zone marquée V figure 2, suivant un second mode de réalisation ; et
- la figure 6 est la même vue que la figure 4, mais selon le second mode de réalisation.

### DESCRIPTION DETAILLEE

Sur la figure 2, on retrouve, par référence avec la figure 1 et donc sur un turboréacteur 10, un ensemble 2 de queue de moteur 12, comprenant un élément central 1 d'éjection de gaz (ou cône d'éjection) et une bride 9 de liaison interposée entre, à l'amont, une sortie métallique d'un turboréacteur (ici la virole annulaire interne 22a du carter d'échappement) et, à l'aval, ledit élément central 1, pour les relier ensemble via les fixations axiales 5. L'élément central 1 est en composite à matrice céramique et annulaire autour de l'axe (X). Il est adapté à ce que du gaz soit éjecté par le turboréacteur autour de lui, d'amont vers l'aval ; voir flèche F figures 1,2.

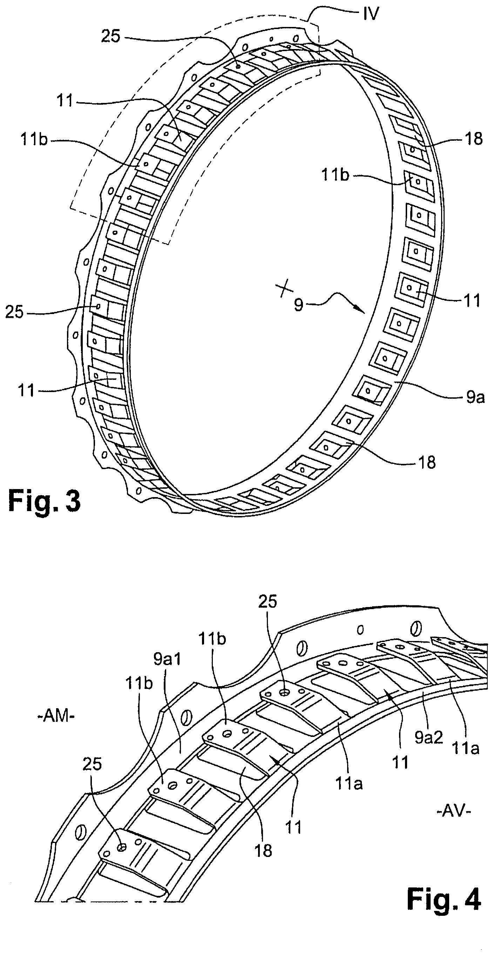

Conformément à l'invention et comme illustré figures 2,3, la bride de liaison 9 comprend une partie annulaire 9a, coaxiale avec l'élément central 1 et, circonférentiellement, des pattes flexibles 11.

Les pattes 11 flexibles se succèdent circonférentiellement, de façon régulières, autour de l'axe X, sur la partie annulaire 9a. Les pattes 11 se présentent comme des lames qui peuvent être sensiblement rectangulaires. Pour leur articulation flexible par rapport à la partie annulaire 9a, elles présentent individuellement, axialement :
- une première extrémité 11a à (l'endroit de) laquelle la patte est raccordée de façon monobloc à ladite partie annulaire 9a, et
- une seconde extrémité 11b libre, en saillie radiale (axe Z) vers l'extérieur par rapport à la première extrémité 11a et vers laquelle la patte 11 est fixée avec l'élément central 1.

Chacune peut donc fléchir à la première extrémité 11a. Elles définissent autant de supports souples.

L'élément central/cône d'éjection 1, ci-après dénommé systématiquement élément central, est en composite à matrice céramique et la bride de liaison 9 est métallique. Il peut s'agir d'alliage de titane ou de tout autre alliages à haute tenue en température.

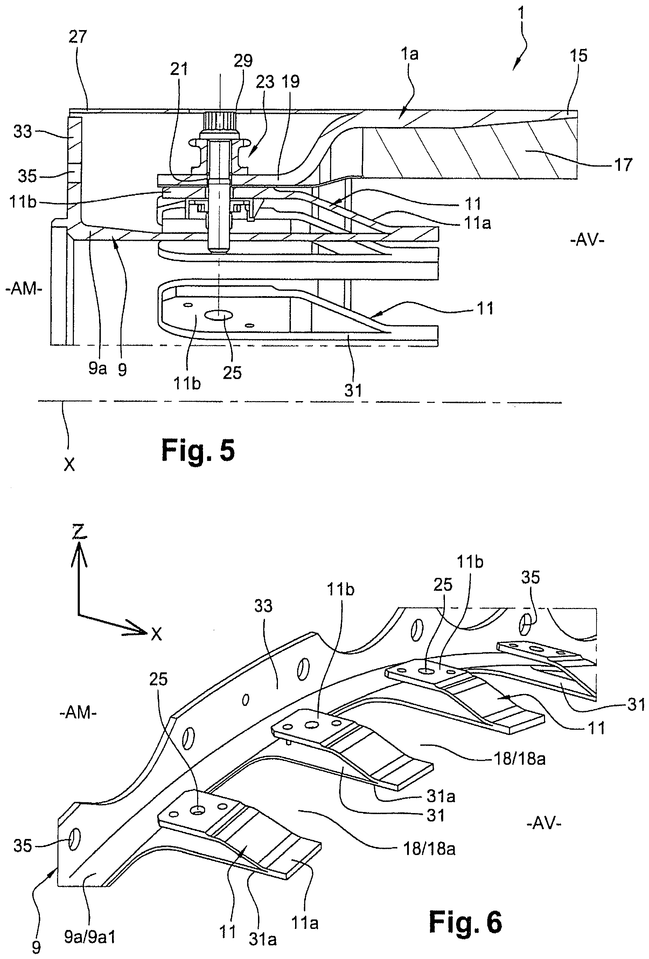

Notamment pour ne pas fixer les pattes 11 à l'élément central 1 en zone traitée pour une atténuation acoustique (voir détails ci-après ; zone 13) ni dans le bulbe 7, la seconde extrémité libre 11b d'une dite (de chaque) patte 11 flexible, où il y a fixation avec l'élément central 1, est située axialement à l'amont (AM) de la première extrémité 11a de cette patte ; voir notamment figure 5.

En particulier dans ce cas, l'élément central 1 pourra présenter une paroi périphérique 15:
- pourvue localement d'une structure 17 d'atténuation acoustique à âme alvéolaire, et
- présentant, en amont de la structure 17 d'atténuation acoustique, une partie extrême amont 19 où l'élément central 1 est fixé avec lesdites pattes flexibles 11, à leurs secondes extrémités libres 11b.

Ainsi, la structure 17 d'atténuation acoustique sera bien cantonnée en aval de la partie 19 par laquelle s'opérera la fixation avec les pattes 11.

Pour fiabiliser la fixation, la partie extrême amont 19 formera favorablement un anneau circonférentiellement fermé prolongeant de façon monobloc la paroi périphérique 15 vers l'amont par rapport à la structure 17 d'atténuation acoustique, comme un axial. Ce rebord annulaire 19 est traversé de trous 21 où passent des vis 23 de fixation qui traversent également d'autres trous 25 que présentent les pattes 11 flexibles vers leurs secondes extrémités libre 11b respectives.

En outre, pour favoriser un débattement radial important et la mise en place des fixations (telles les vis 23 ; voir figures 2,5), il pourra être préféré que, radialement, les pattes 11 flexibles s'étendent en saillie par rapport à des ouvertures, ici des découpes, 18 formées dans la partie annulaire 9 ; voir figures 3,4,6.

En pratique, on pourra prévoir que l'élément central 1 comprenne, comme indiqué en référence à la figure 1, une partie amont 1a (couramment donc désignée « front plug »), de forme sensiblement cylindrique et, fixée à elle axialement (par exemple par boulonnage), une partie aval 1b (couramment donc désignée « rear plug »), de forme conique. Ce serait alors cette partie amont 1a qui serait équipée d'au moins une dite structure 17 d'atténuation acoustique, et donc de la paroi 15 et de la partie 19.

Avec une orientation de la partie extrême amont 19 s'étendant parallèlement audit axe X, de même pour les pattes 11 vers leurs secondes extrémités 11b, on pourra fixer ensemble la partie amont 1a de l'élément central 1 et la bride de liaison 9 parallèlement à l'axe X, évitant ainsi des sollicitations obliques.

Des vis 23 traversant radialement des trous coaxiaux 21 25 radiaux pourront alors assurer une fixation fiable et efficace, sans contraintes excessives.

Notamment pour la mise en place et/ou la maintenance de ces vis, il est aussi proposé que la paroi périphérique 15 se prolonge, par un tronçon de paroi 27 :
- axialement vers l'amont,
- et de façon radialement extérieure par rapport à ladite partie extrême amont 19 que ce tronçon de paroi 27 recouvrira alors, sauf à des endroits de passages 29 radiaux, pour les vis 23 ; voir figures 2,5.

On notera aussi figures 2 et 5 que, par l'intermédiaire des dites pattes 11 assurant donc une souplesse de l'aval vers l'amont dans les fixations, la structure 17 d'atténuation acoustique pourra s'étendre axialement, en extrémité amont, jusqu'au droit des pattes11.

La figure 6 schématise une alternative à la solution des figures 2,5. En effet, la partie annulaire 9a, coaxiale avec l'élément central 1, se situe non plus, circonférentiellement, en amont et en aval des pattes 11 (parties respectivement 9a1 et 9a2b figure 4), mais uniquement en amont de ces pattes : partie 9a1 figure 6. Depuis la partie 9a1 annulaire, s'étendent axialement des languettes 31 axiales entre lesquelles sont réservés desdites ouvertures 18, ici en forme chacune de créneaux sectorisés 18a. La solution de la figure 5 est d'ailleurs aussi ainsi constituée. Le raccordement à ladite partie annulaire 9a s'opère alors par l'intermédiaire des languettes 31. Et c'est à l'extrémité libre aval 31a (voir figure 6) de chaque languette 31 qu'est raccordée (par exemple soudée) ladite première extrémité 11a. La seconde extrémité 11b libre, encore en saillie radiale (axe Z) vers l'extérieur par rapport à la première extrémité 11a et vers laquelle la patte 11 est fixée avec l'élément central 1, est encore située en mont de ladite première extrémité 11a. Dans ce cas, les pattes 11 sont situées circonférentiellement entre deux ouvertures 18 successives et, radialement en face des languettes 31 respectives.

Figures 4 et 6, on voit aussi bien la collerette radiale à travers des trous axiaux 35 de laquelle des fixations axiales 5 (voir figure 2), telles que des vis, permettent de fixer la bride de liaison 9 à ladite sortie métallique du turboréacteur, ici la virole annulaire interne 22a du carter d'échappement 22.

## Revendications

1. Ensemble pour turboréacteur d'aéronef, l'ensemble comprenant :
- un élément central (1) d'éjection de gaz, annulaire autour d'un axe (X) et adapté à ce que du gaz soit éjecté par le turboréacteur autour de lui, d'amont vers l'aval, et
- une bride de liaison (9) interposée entre, à l'amont, une sortie (22a) métallique du turboréacteur et, à l'aval, l'élément central (1), pour les relier ensemble, où la bride de liaison (9) comprend une partie annulaire (9a), et, circonférentiellement, des pattes flexibles (11) présentant individuellement, axialement :
- une première extrémité (11a) où la patte est raccordée à ladite partie annulaire, et
- une seconde extrémité (11b) libre vers laquelle ladite patte est fixée avec l'élément central (1), **caractérisé en ce que** la seconde extrémité libre (11b) est située axialement à l'amont de la première extrémité (11a).

2. Ensemble selon la revendication 1 dans lequel, radialement, les pattes (11) flexibles s'étendent en saillie radiale vers l'extérieur par rapport à la première extrémité et/ou par rapport à des ouvertures (18,18a) de la bride de liaison (9).

3. Ensemble selon l'une des revendications précédentes, dans lequel l'élément central (1) présente une paroi périphérique (15) présentant une partie extrême amont (19) où l'élément central (1) est fixé avec lesdites pattes flexibles (11) à leurs dites secondes extrémités libres (11b).

4. Ensemble selon la revendication 1 ou 2 dans lequel, l'élément central (1) présente une paroi périphérique (15):
- pourvue localement d'une structure (17) d'atténuation acoustique, et
- présentant, en amont de la structure d'atténuation acoustique, une partie extrême amont (19) où l'élément central (1) est fixé avec lesdites pattes flexibles (11) à leurs dites secondes extrémités libres (11b).

5. Ensemble selon la revendication 3 ou 4, dans lequel la partie extrême amont (19) de l'élément central (1) s'étend parallèlement audit axe (X), de même que lesdites pattes flexibles (11), vers leurs dites secondes extrémités (11b), de façon à être fixées ensemble par des vis (23) les traversant.

6. Ensemble selon la revendication 5, dans lequel la paroi périphérique (15) se prolonge axialement vers l'amont (en 27), et de façon radialement extérieure par rapport à ladite partie extrême amont (19) qu'elle recouvre sauf à des endroits de passages radiaux (29) pour les vis (23).

7. Ensemble selon l'une des revendications 4 à 6, dans lequel la structure d'atténuation acoustique (17) s'étend axialement jusqu'au droit desdites pattes (11).

8. Ensemble selon la revendication 4 seule ou en combinaison avec l'une des revendications 5 à 7, dans lequel la structure (17) d'atténuation acoustique est à âme alvéolaire.

9. Ensemble selon l'une des revendications précédentes, dans lequel l'élément central (1) est en composite à matrice céramique et la bride de liaison (9) est métallique.

10. Ensemble selon l'une des revendications précédentes, dans lequel une dite patte (11) est raccordée à ladite partie annulaire (9a), à une dite première extrémité (11a), par l'intermédiaire de languettes (31) s'étendant vers l'aval et monobloc à l'amont avec ladite partie annulaire (9a).

11. Ensemble selon la revendication 2 seule ou en combinaison avec l'une des revendications 3 à 9, dans lequel une dite patte (11) est raccordée de façon monobloc à ladite partie annulaire (9a), à l'endroit d'une partie de ladite partie annulaire formant un bord aval (18a) d'une dite ouverture (18).

## Patentansprüche

1. Anordnung für ein Turbostrahltriebwerk eines Luftfahrzeugs, wobei die Anordnung enthält:
- ein zentrales Gasausstoßelement (1), das ringförmig um eine Achse (X) verläuft und dazu ausgelegt ist, dass Gas von dem Turbostrahltriebwerk um dieses herum von stromaufwärts nach stromabwärts ausgestoßen wird, und
- einen Verbindungsflansch (9), der zwischen stromaufwärts einem metallischen Auslass (22a) des Turbostrahltriebwerks und stromabwärts dem zentralen Element (1) eingefügt ist, um sie miteinander zu verbinden, wobei der Verbindungsflansch (9) einen ringförmigen Abschnitt (9a) und in Umfangsrichtung flexible Laschen (11) enthält, die einzeln axial enthalten:
- ein erstes Ende (11a), an dem die Lasche mit dem ringförmigen Abschnitt verbunden ist, und
- ein freies zweites Ende (11b), zu dem hin die Lasche mit dem zentralen Element (1) befestigt ist,
**dadurch gekennzeichnet, dass**
das freie zweite Ende (11b) axial stromaufwärts des ersten Endes (11a) liegt.

2. Anordnung nach Anspruch 1, wobei sich die flexiblen Laschen (11) in Bezug auf das erste Ende und/oder in Bezug auf Öffnungen (18, 18a) des Verbindungsflansches (9) radial nach außen vorspringend erstrecken.

3. Anordnung nach einem der vorhergehenden Ansprüche, wobei das zentrale Element (1) eine Umfangswand (15) mit einem stromaufwärts gelegenen Endabschnitt (19) aufweist, an dem das zentrale Element (1) mit den flexiblen Laschen (11) an ihren freien zweiten Enden (11b) befestigt ist.

4. Anordnung nach Anspruch 1 oder 2, wobei das zentrale Element (1) eine Umfangswand (15) aufweist, die:
- bereichsweise mit einer Schalldämpfungsstruktur (17) versehen ist, und
- stromaufwärts der Schalldämpfungsstruktur einen stromaufwärts gelegenen Endabschnitt (19) aufweist, an dem das zentrale Element (1) mit den flexiblen Laschen (11) an ihren freien zweiten Enden (11b) befestigt ist.

5. Anordnung nach Anspruch 3 oder 4, wobei sich der stromaufwärts gelegene Endabschnitt (19) des zentralen Elements (1) parallel zur Achse X erstreckt, ebenso wie die flexiblen Laschen (11) zu ihren zweiten Enden (11b) hin, so dass sie mittels durch diese hindurchgehende Schrauben (23) aneinander befestigt sind.

6. Anordnung nach Anspruch 5, wobei die Umfangswand (15) sich axial stromaufwärts (bei 27) und radial außen in Bezug auf den stromaufwärts gelegenen Endabschnitt (19) fortsetzt, den sie außer an Stellen mit radialen Durchgängen (29) für die Schrauben (23) bedeckt.

7. Anordnung nach einem der Ansprüche 4 bis 6, wobei die Schalldämpfungsstruktur (17) axial bis an die Laschen (11) heranreicht.

8. Anordnung nach Anspruch 4 für sich genommen oder in Kombination mit einem der Ansprüche 5 bis 7, wobei die Schalldämpfungsstruktur (17) einen Wabenkern aufweist.

9. Anordnung nach einem der vorhergehenden Ansprüche, wobei das zentrale Element (1) aus einem Verbundwerkstoff mit keramischer Matrix besteht und der Verbindungsflansch (9) aus Metall besteht.

10. Anordnung nach einem der vorhergehenden Ansprüche, wobei eine Lasche (11) an einem ersten Ende (11a) mit dem ringförmigen Abschnitt (9a) über stromabwärts verlaufende Zungen (31) verbunden ist, die stromaufwärts einstückig mit dem ringförmigen Abschnitt (9a) ausgeführt sind.

11. Anordnung nach Anspruch 2 für sich genommen oder in Kombination mit einem der Ansprüche 3 bis 9, wobei eine Lasche (11) einstückig mit dem ringförmigen Abschnitt (9a) verbunden ist, und zwar an der Stelle eines Teils des ringförmigen Abschnitts, der eine stromabwärts gelegene Kante (18a) einer Öffnung (18) bildet.

## Claims

1. An assembly for an aircraft turbojet engine, the assembly comprising:
- a central element (1) for exhausting gas, which is annular about an axis (X) and is adapted to have gas exhausted by the turbojet engine around it, from upstream to downstream; and
- a connecting flange (9) interposed between, upstream, a metallic outlet (22a) of the turbojet engine and, downstream, the central element (1), to join them together,
wherein the connecting flange (9) comprises an annular portion (9a) and, circumferentially, flexible lugs (11) individually having axially:
- a first end (11a) where the lug is connected to said annular portion, and
- a second free end (11b) towards which said lug is fixed with the central element (1),
**characterized in that** the second free end (11b) is located axially upstream of the first end (11a).

2. The assembly according to claim 1 in which the flexible lugs (11) extend radially outwardly from the first end and/or from openings (18, 18a) of the connecting flange (9).

3. The assembly according to one of the preceding claims, wherein the central element (1) has a peripheral wall (15) having an upstream end portion (19) where the central element (1) is fixed with said flexible lugs (11) at their said second free ends (11b).

4. The assembly according to claim 1 or 2 wherein the central element (1) has a peripheral wall (15):
- locally provided with a sound-attenuating structure (17); and
- having, upstream of the sound-attenuating structure, an upstream end portion (19) where the central element (1) is fixed with said flexible lugs (11) at their said second free ends (11b).

5. The assembly according to claim 3 or 4, wherein the upstream end portion (19) of the central element (1) extends parallel to said axis (X), as do said flexible lugs (11), towards their said second ends (11b), so as to be joined together by screws (23) passing through them.

6. The assembly according to claim 5, wherein the peripheral wall (15) extends axially upstream (at 27), and radially outwardly with respect to said upstream end portion (19) which it covers except at locations of radial passages (29) for the screws (23).

7. The assembly according to one of claims 4 to 6, wherein the sound-attenuating structure (17) extends axially to the right of said lugs (11).

8. The assembly according to claim 4 alone or in combination with one of claims 5 to 7, wherein the sound-attenuating structure (17) is honeycombed.

9. The assembly according to one of the preceding claims, in which the central element (1) is made of a ceramic matrix composite material and the connecting flange (9) is metallic.

10. The assembly according to one of the preceding claims, wherein one said lug (11) is connected to said annular portion (9a), at said first end (11a), by means of tabs (31) extending downstream and integral upstream with said annular part (9a).

11. The assembly according to claim 2 alone or in combination with one of claims 3 to 9, wherein one said lug (11) is integrally connected to said annular part (9a) at a part of said annular portion forming a downstream edge (18a) of one said opening (18).
